# EUROPÄISCHE PATENTSCHRIFT

(11) **EP 0 562 482 B1**
(45) Veröffentlichungstag und Bekanntmachung des Hinweises auf die Patenterteilung: **04.09.1996**
(21) Anmeldenummer: 93104536.3
(22) Anmeldetag: 19.03.1993
(51) Int. Cl.: B62B 3/06

(54) **Gabelhubwagen**
Fork lift truck
Chariot élévateur à fourche

(30) Priorität: 26.03.1992 DE 4209861
(43) Veröffentlichungstag der Anmeldung: 29.09.1993
(73) Patentinhaber: Linde Aktiengesellschaft, D-65189 Wiesbaden (DE)
(72) Erfinder: Rousseau, Dominique, F-86530 Naintre (FR)
(74) Vertreter: Schaefer, Gerhard, Dr.

(56) Entgegenhaltungen:
- DE-A- 3 710 757
- DE-B- 1 245 561
- US-A- 4 969 794

## Beschreibung

Die Erfindung betrifft einen Gabelhubwagen mit einem Antriebsteil und einem anhebbaren Lastteil, der auf Tragrollen abgestützte Lastarme aufweist. Derartige Gabelhubwagen werden zum Beispiel als Niederhubwagen oder Kommissionierer in Geh-, Sitz- oder Standausführung eingesetzt. Oft sind diese Geräte deichsel gelenkt.

Bei einem bekannten Gabelhubwagen sind die Lastarme, die im Querschnitt gesehen, ein Hohlprofil zur Aufnahme des Hubgestänges aufweisen, über kurze Gabelzinken geschoben. Die in die Lastarme hineinragenden Gabelzinken sind mit dem Lastteil des Gabelhubwagens verbunden, beispielsweise verschweißt. Es hat sich herausgestellt, daß diese Art der Befestigung der Lastarme am Lastteil im Hinblick auf den Herstellungs- und Montageaufwand verbesserungsbedürftig ist. Darüber hinaus kommt es bei einer derartigen Konstruktion zu Dauerfestigkeitsproblemen. Da die Lastarme durch die zu transportierende Last immer wieder elastisch verformt werden, kommt es vermehrt in demjenigen Bereich der Lastarme, in dem die eingeschobenen Gabelzinken enden, zu Brüchen. Die Ursache hierfür ist in dem relativ scharfkantigen Übergang vom Gabelzinken zum Lastarm zu sehen, wobei an dieser Stelle zugleich eine starke Verringerung des für die Festigkeit maßgeblichen Materialquerschnitts erfolgt. Dies führt dort zu einem ungünstigen Kraftfluß und damit zu Spannungsspitzen in den Lastarmen, was zu Ermüdungsbrüchen führt.

DE-A-1 245 561 offenbart einen Hubwagen gemäß den Oberbegriff des Anspruchs 1.

Der vorliegenden Erfindung liegt die Aufgabe zugrunde, einen Gabelhubwagen der eingangs genannten Art zur Verfügung zu stellen, der eine verbesserte Befestigung der Lastarme aufweist.

Diese Aufgabe wird erfindungsgemäß dadurch gelöst, daß die Lastarme an einem quer zur Fahrzeuglängsachse angeordneten, im Vertikalschnitt durch den Gabelhubwagen gesehen, im wesentlichen U-förmigen Profil des Lastteils befestigt sind, wobei die Stege und der die Stege verbindende Gurt des U-Profils jeweils an der zur Befestigung eines Lastarm vorgesehenen Stelle des U-Profils zur Aufnahme des Lastarms durchbrochen sind. Auf diese Weise werden die bisher zur Befestigung der Lastarme erforderlichen kurzen Gabelzinken überflüssig, wodurch sich der Herstellungs- und Montageaufwand verringert. Eine die Dauerfestigkeit verringernde Knickstelle, wie sie bei den Gabelhubwagen des Standes der Technik durch den in das Hohlprofil des Lastarms eingeschobenen Gabelzinken an dessen Ende gebildet wurde, ist nicht mehr vorhanden. Die direkt am Lastteil befestigten Lastarme haben darüber hinaus eine auf der gesamten Länge gleichbleibende Materialstärke. Die besondere Art und Weise der Befestigung der Lastarme mit Hilfe eines U-Profils ermöglicht einen guten Kraftfluß.

Eine besonders vorteilhafte Befestigung der Lastarme ergibt sich dann, wenn die Lastarme im Bereich der Durchdringungslinien zum U-Profil mit dessen Stegen und dessen Gurt verschweißt sind. Es können dabei innerhalb oder außerhalb des U-Profils oder auch beidseitig Schweißnähte angebracht werden.

Bei einem Gabelhubwagen, der batterie-elektrisch betrieben ist und bei dem auf dem Lastteil eine Batterieaufnahmevorrichtung angeordnet ist, erweist es sich als zweckmäßig, das U-Profil an der Batterieaufnahmevorrichtung zu befestigen oder an dieser zu bilden. Beispielsweise kann der Boden der Batterieaufnahmevorrichtung bereits bei der Herstellung entsprechend geformt werden.

Weitere Vorteile und Einzelheiten der Erfindung werden anhand eines in den Figuren schematisch dargestellten Ausführungsbeispieles näher erläutert. Dabei zeigt:
- Figur 1: eine Seitenansicht eines Gabelhubwagens;
- Figur 2: eine perspektivische Darstellung der erfindungsgemäßen Befestigung der Lastarme des Gabelhubwagens;
- Figur 3: eine Darstellung nach Figur 2 einschließlich der verdeckten Kanten.

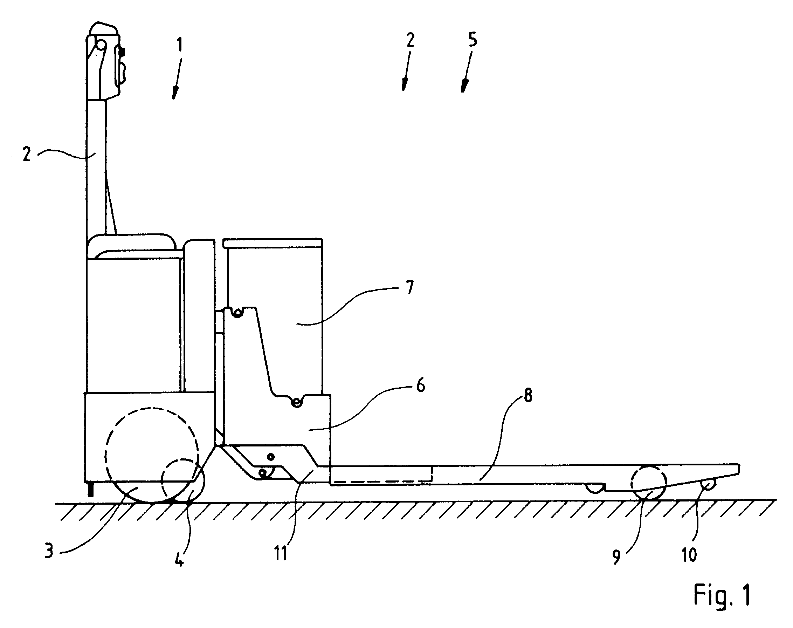

In Figur 1 ist ein als Elektro-Deichsel-Hubwagen ausgebildeter Gabelhubwagen dargestellt. Der Gabelhubwagen weist einen Antriebsteil 1 mit Deichsel 2, Antriebsrad 3 und Stützrollen 4 auf. Mit dem Antriebsteil 1 gelenkig verbunden ist ein Lastteil 5, der über einen nicht dargestellten Hubmechanismus anhebbar ist. Auf dem Lastteil 5 ist eine Batterieaufnahmevorrichtung 6 angeordnet, in der sich eine austauschbare Batteriebox 7 befindet. Das Lastteil 5 ist mit Lastarmen 8 versehen, die jeweils am in der Figur rechten Ende eine Tragrolle 9 und eine sogenannte Kletterrolle 10 aufweisen. Die Lastarme 8 sind in Figur 1 auf die bei den Gabelhubwagen des Standes der Technik bekannte Weise befestigt. Hierzu sind kurze Gabelzinken 11 am Lastteil 5 befestigt, die sich in das Hohlprofil der Lastarme 8 hinein erstrecken und mit diesem fest verbunden sind. Im Innern des Hohlprofils ist das Gestänge zum Ausfahren der Tragrolle 9 nach vertikal unten und damit zum Anheben der Lastarme 8 angeordnet.

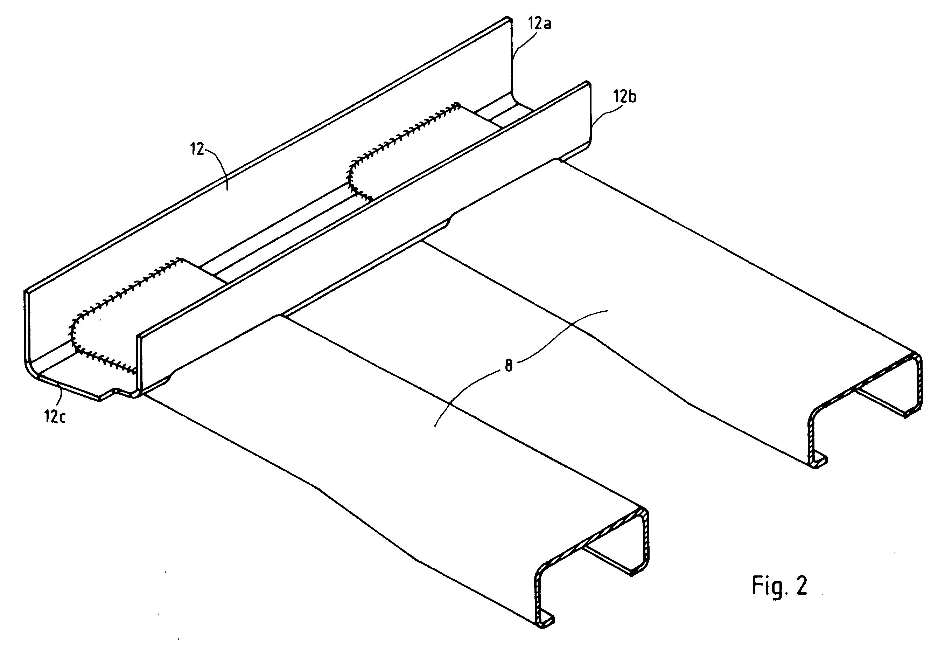

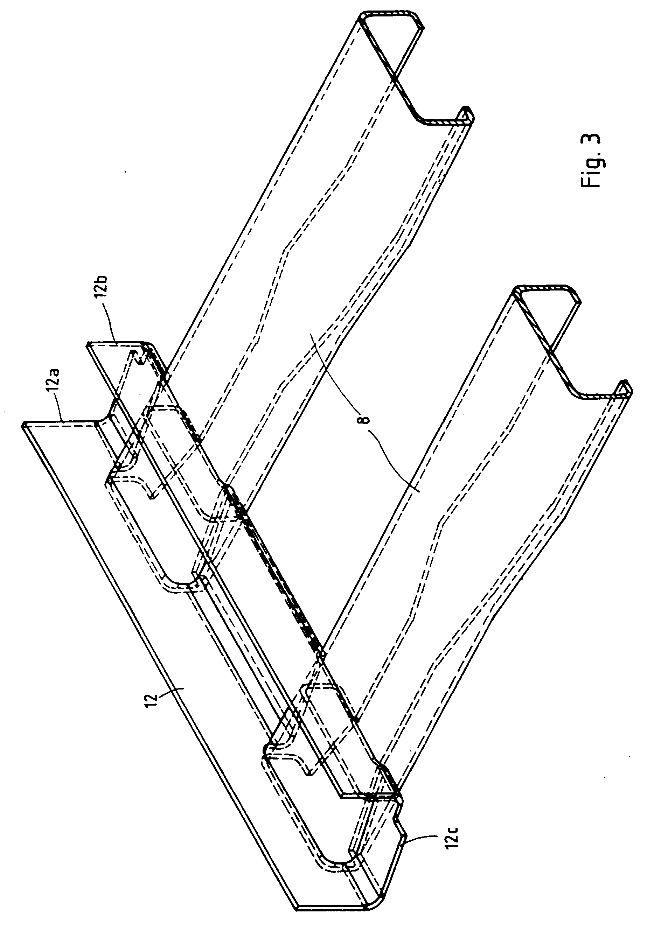

In den Figuren 2 und 3 ist die erfindungsgemäße Befestigung der Lastarme 8 gezeigt. Hierzu ist ein im wesentlichen U-förmiges Profil 12 vorgesehen, das quer zur Fahrzeuglängsachse, vorzugsweise unterhalb der Batterieaufnahmevorrichtung 6, angeordnet und mit dieser fest verbunden oder daran gebildet ist (in den Figuren 2 und 3 nicht dargestellt). Das U- Profil 12 ist an den Stegen 12a und 12b sowie an dem die Stege 12a und 12b verbindenden Gurt 12c mit Ausnehmungen zur Aufnahme der Lastarme 8 versehen. Die Lastarme 8 erstrecken sich also in das U-Profil 12 hinein. Die Lastarme 8 sind im Bereich der Durchdringungslinien mit den Stegen 12a und 12b und dem Gurt 12c verschweißt.

## Patentansprüche

1. Gabelhubwagen mit einem Antriebsteil und einem anhebbaren Lastteil, der auf Tragrollen abgestützte Lastarme aufweist, **dadurch gekennzeichnet,** daß die Lastarme (8) an einem quer zur Fahrzeuglängsachse angeordneten, im Vertikalschnitt durch den Gabelhubwagen gesehen, im wesentlichen U-förmigen Profil (12) des Lastteils (1) befestigt sind, wobei die Stege (12a,12b) und der die Stege (12a,12b) verbindende Gurt (12c) des U-Profils (12) jeweils an der zur Befestigung eines Lastarm (8) vorgesehenen Stelle des U-Profils (12) zur Aufnahme des Lastarms (8) durchbrochen sind.

2. Gabelhubwagen nach Anspruch 1, dadurch gekennzeichnet, daß die Lastarme (8) im Bereich der Durchdringungslinien zum U-Profil (12) mit dessen Stegen (12a,12b) und dessen Gurt (12c) verschweißt sind.

3. Gabelhubwagen nach Anspruch 1 oder 2, wobei der Gabelhubwagen batterie-elektrisch betrieben ist und auf dem Lastteil eine Batterieaufnahmevorrichtung angeordnet ist, dadurch gekennzeichnet, daß das U-Profil (12) an der Batterieaufnahmevorrichtung (6) befestigt oder an dieser gebildet ist.

## Claims

1. Fork-lift truck with a driving part and a load part which can be raised and which exhibits load arms supported on supporting rollers, characterised in that the load arms (8) are fixed to a profiled section (12) of the load part (1) which is of essentially U-shape viewed in the vertical section through the fork-lift truck and disposed at right angles to the longitudinal axis of the vehicle, the limbs (12a, 12b) and the chord (12c) connecting the limbs (12a, 12b) of the U-shaped profiled section (12) being in each case cut away to receive the load arm (8) at the location of the U-shaped profiled section (12) intended for fixture of a load arm (8).

2. Fork-lift truck according to claim 1, characterised in that in the area of the cut lines the load arms (8) are welded to the U-shaped profiled section (12) by its limbs (12a, 12b) and its chord (12c).

3. Fork-lift truck according to claim 1 or 2, the fork-lift truck being operated by electric battery and a battery holding device being disposed on the load part, characterised in that the U-shaped profiled section (12) is fixed to the battery holding device (6) or formed on the latter.

## Revendications

1. Chariot élévateur à fourche constitué d'une partie motrice et d'une partie de charge comportant des bras de charge montés sur des galets porteurs,
caractérisé en ce que
les bras de charge (8) sont fixés à un profilé (12) de la partie de charge (1), ce profilé étant transversal par rapport à l'axe longitudinal du véhicule et présentant en coupe verticale par rapport au chariot essentiellement la forme d'un U dont des branches (12a, 21b) et la base (12c) qui les relie, présentent chacune, à l'endroit prévu pour la fixation d'un bras de charge (8), une découpe pour y loger le bras de charge.

2. Chariot élévateur selon la revendication 1,
caractérisé en ce que
les bras de charge (8) sont soudés, le long des bords des découpes du profilé en U (12), aux branches (12a, 12b) et à la base (12c) de ce profilé.

3. Chariot élévateur selon la revendication 1 ou 2, entraîné par une batterie électrique montée dans un logement de la partie de charge,
caractérisé en ce que
le profilé en U (12) est fixé au logement de batterie (6) ou mis en forme avec celui-ci.
